# EUROPEAN PATENT APPLICATION

(11) **EP 2 410 444 A2**
(43) Date of publication of application: **25.01.2012**
(21) Application number: 11174296.1
(22) Date of filing: 18.07.2011
(51) Int. Cl.: G06F 17/30

(54) **System and method for dynamic generation of individualized playlists according to user selection of musical features**

(30) Priority: 21.07.2010 US 840893
(71) Applicant: Magix AG, 10117 Berlin (DE)
(72) Inventor: Herberger, Tilman, 01219 Dresden (DE); Tost, Titus, 01219 Dresden (DE)

(57) **Abstract**

There is provided herein a system and method for efficient generation and management of similarity playlists. The instant invention allows users to initiate and shape the playlist generation process to automatically provide playlists that are based on the musical features of the files stored in the database and that contain musically similar items. Furthermore, the instant invention allows the user to select and weight the musical criteria that are used to form the playlist, thereby adapting it accordingly. In the preferred embodiment, the user will initiate the playlist generation process by selecting a music item. Based on the musical features of that music item a similarity playlist will be automatically constructed. As part of a parameterization step the user will review the playlist and shape it by potentially indicating a preference or dislike for each musical feature and using that indication the playlist generation process will then be re-initiated.

## Description

### FIELD OF THE INVENTION

The present invention relates generally to systems and methods of organizing and managing multiple music items and, more particularly, to systems and methods for creating music playlists.

### BACKGROUND OF THE INVENTION

In recent years multimedia content has become increasingly available to the general public. High-performance home computers, the ever-increasing availability of broadband data-networks, efficient data compression methods, and high capacity storage media have all played a role in the increasing access to, and demand for, multimedia content. More importantly for purposes of the instant invention, the increase in demand for, and usage of, audio works has been especially noticeable.

A user's audio collection is typically stored as individual files on the hard disc of a personal computer or another data storage medium. The collection is typically administered by a special purpose program and stored in a database that has been created for that purpose. Each song typically has some minimal amount of descriptive metadata associated with it (e.g., song title, performer, style, etc.) which may or may not be complete. Such a computerized database allows a user to quickly locate and initiate the playback of a particular song. However, a database-based approach to managing a large number of music items is most useful to the user who has intimate knowledge of his or her entire music collection and is able to identify with some particularity the song or songs that are desired to be played. In most cases, standard database text search logic will be used to locate audio content (e.g., by title, album, etc.), but that approach is difficult to fine tune and the results returned tend to be either over or under inclusive.

This weakness of the database search function has led to the development of the now well-known playlist concept - i.e., a playlist is a subset of an audio database that conventionally contains a hand picked collection of music items that the user wishes to listen to sequentially, randomly, etc.

However, building playlists from a database that contains large numbers of songs is a cumbersome process. For example, the user must find and select an individual music item, select a playlist, signal that the found item(s) be included in the playlist, find and select the next item, etc.

In view of the difficulties inherent in using playlists to manage a large number of songs in a database, it is no surprise that a number of aids have been developed to streamline the process. For example, shortcuts have been developed that allow the user to insert complete directories into a selected playlist. Additionally, playlist generation routines have been devised that allow the user to specify a genre, artist, year, album, etc., and have all of the audio items in the database that match the specified criteria assembled into a playlist.

Additionally, software developers have provided increased functionality in the database management software that resides on the user's computer. The current state-of-the-art provides PC-based software packages that allow a user to create and store playlist files until they are needed. This approach however is not typically fully automated since the user must select the individual songs that comprise the playlist or specify the criteria for a database search and then store the playlist for later reproduction.

Another disadvantage of the prior art approach is that a playlist, once generated, is a static construct that represents the user's preferences or the search results as they existed at one moment in time. If a user were, for example, to want to modify a playlist, the search that created it would need to be manually entered again and/or the user would need to manually search for songs to add to the playlist. When a new song is added to an audio database, it will not be included in a playlist that would logically accommodate it unless the user remembers to add that song manually or unless a new search is conducted. Finally, none of these searches will uncover a song that has been misclassified as to genre, artist, etc., nor will a conventional search uncover songs that are sonically similar to a song that is a user favorite.

All of these approaches are user initiated processes and the task of generating a playlist is ultimately left to the user. Playlists generated via the conventional approach are, thus, either the product of a long and cumbersome manual process or they are products of automated algorithms that choose songs based on the associated audio metadata (e.g., genre, artist, year, album, etc.) Additionally all of these approaches provide the user with a static playlist, i.e., the user is provided with a playlist file that does not change during the listening process or anytime later unless it is manually updated.

An additional problem that is encountered when managing a very large audio database is that only an exceptional user will be able to remember all the individual music items stored therein. This is especially understandable in view of the fact that some of the files might have been added years earlier. Thus, amassing a large database of audio content may ultimately be unsatisfying to the user who cannot locate items that are known to be in the database or even remember specific audio content.

Thus, technological advances have allowed a user to amass an arbitrarily large number of audio files but then do not provide the tools necessary to enjoy them fully. When the user wants to create a playlist, he or she must remember each individual track or artist - an almost impossible undertaking when the user is using a database that has been accumulated over many years. Even automatic playlist generation routines only provide a partial solution to this problem because these routines only scratch the surface of a huge music database.

In recent years further advancements in playlist creation and audio data management have been made. For example, audio content may be analyzed when added to a database to determine its musical characteristic / features. These extracted musical features can then be used to generate playlists containing items that have similar calculated features. Such approaches allow the user to influence the playlist generation process on a somewhat intuitive level.

Such an approach, however, also has its drawbacks. For example, playlist/generation process is like a black box algorithm which provides the user with a new similarity playlist each time the algorithm is initiated, but leaves the user without an explanation as to why a particular music item was included. A user who is new to similarity broad playlist generation might find such an approach novel at first, ultimately the disadvantages of this approach will become apparent.

The user is even more limited in his self-initiated choices when creating a new playlist. A typical prior art approach will provide the user with music items that are musically similar to a selected one, however if the user does not like one, some or even all of the music items, the playlist generation process will have to be initiated again. Typically, the user will be limited to the selection of a single music item from which the playlist will be generated and multiple starter songs might need to be selected sequentially before a satisfactory playlist is obtained. With such an approach, the user can either accept the next music item or initiate the playlist generation process again and again. This process, although providing a fresh look at the music collection of a user, is unwieldy to use and is rapidly losing favor among end users.

Thus, what is needed is a system and method that provides a user with a quick and dynamic method of playlist generation wherein the algorithm that is used creates a playlist that is based on the musical characteristics of the music items, rather than being based on song metadata. This method should also provide advanced selection criteria for the user, which allows a user to weight the selection criteria associated with a currently playing musical work and thereby signal to the playlist generation algorithm that he or she prefers (or not) other music items containing (or not) a particular musical feature. Furthermore, it would be preferred that this playlist generation algorithm would be able to generate a playlist in a short amount of time without initiating an extensive re-analysis of the music items stored in the database.

Heretofore, as is well known in the media editing industry, there has been a need for an invention to address and solve the above-described problems. Accordingly, it should now be recognized, as was recognized by the present inventors, that there exists, and has existed for some time, a very real need for a system and method that would address and solve the above-described problems.

Before proceeding to a description of the present invention, however, it should be noted and remembered that the description of the invention which follows, together with the accompanying drawings, should not be construed as limiting the invention to the examples (or preferred embodiments) shown and described. This is so because those skilled in the art to which the invention pertains will be able to devise other forms of the invention within the ambit of the appended claims.

### SUMMARY OF THE INVENTION

There is provided herein a system and method for efficient generation and management of similarity playlists from an audio database. The instant invention will allow users of such a database to initiate and shape the playlist generation process to automatically provide playlists that are based on the musical features of the files stored in the database. This will result in playlists that contain musically similar items. Furthermore, the instant invention will allow the user to select and weight the musical criteria that are used to form the playlist, thereby adapting it accordingly. In the preferred embodiment, the user will initiate the playlist generation process by selecting a music file. A similarity playlist will be automatically constructed based on the musical features of the selected work. The user will then be allowed to review the playlist and shape it as part of a parametrization step. During this step, a preference or dislike for each musical feature can potentially be indicated and the playlist generation process will then be re-initiated. The resulting new playlist will be built according to the indicated preferences of a user. Once the user is satisfied with a current similarity playlist, he or she will be given the opportunity to implement a further filtering step which will dynamically adapt the current playlist even further according to his or her preferences. The parametrization step, as well as the filtering step, will both preferably provide immediate results to the user without a new analysis of the music items stored in a database. Note that the filtering and parametrization steps can be performed in any order. One or the other or both might be performed in a given user session.

The methods taught herein will utilize a song model for each individual music item that will be stored in a song model database. The music item might be stored either with the song model or in a separate database. The song model database and the stored song model data will then be used in the similarity playlist generation process. The song model will be generated preferably on a personal computer as part of a preliminary analysis that is performed on each music item in a digital music collection. The analysis step is an integral part of the operation of the instant invention and will preferably be carried out by digital music management software that is resident on or accessible by a personal computer. The analysis step will preferably operate on the entire music database and will preferably generate a number of different attribute values for each music item contained therein. The attribute values will be stored as an audio signature for each music item. This audio signature will then be used in a model generation step resulting in a song model. The song model obtained and stored at this step will then be used as the starting point in the similarity playlist generation process.

The system and method taught herein will preferably be designed to automatically generate a similarity playlist from the music items stored in an audio database. It is generally directed to allowing users to experience the content of their music collection in a completely new way.

In brief, the instant invention will provide the user with a method of automatically generating similarity playlists from an audio database, where the playlists are created based on the musical characteristics or attributes of a selected base music item. The process will preferably be completely automatic and will utilize previously computed attribute values. Furthermore, in some preferred variations, the instant method will operate dynamically, i.e., the process will be performed repeatedly on a series of changing base music items based on previously indicated user personal preference values using this approach. The instant invention will be able to quickly generate an associated similarity playlist without high resource demands and additional analysis steps prior to generating the new similarity playlist.

The preferred method will be implemented by initially executing an analysis on each music item in the audio database. Preferably, this analysis will be carried out at the time each music item is inserted into the database. The result of this analysis is an audio signature that will be used to create a song model that describes the unique features of a music item. The steps involved with generating this song model will preferably be invisible to the user. The user will only be required to select an initial music item - the query music item that will serve as the origin from which the playlist will be formed.

To adapt the similarity playlist to the user's preferences, the preferred system will provide one of the following mechanisms or a combination of them. The user will be able to indicate that certain musical characteristics, so-called classification parameters of the query music item are of greater importance than others. For instance, if the query music item has a slow tempo, it might be important to the user that the music items returned by the instant method should also preferably have a tempo similar to that of the query music item. Note that in the preferred embodiment, this will not be an on/off setting, but a level setting which causes the internal rules engine to place a higher weight on the similarity of a particular musical classification parameter or parameters.

Another preferred embodiment will allow the user to select a song from the similarity list and indicate that he or she likes or dislikes this recommendation in that particular context. The system will then modify the internal rules engine and generate another similarity list according to that preference. In another preferred embodiment, the user will be able to set filters by defining criteria which a song has to meet in order to be even considered as a part of the similarity list. For instance, if the user sets a filter to exclude slow tempo, songs that do have a slow tempo will not be considered at all.

In another preferred embodiment the method will utilize an internal policy wherein all the musical features of a currently selected music item have a pre-defined default weighting which represents the importance of each feature for general musical similarity. By signaling the personal preference for a particular musical feature, a classification parameter e.g., if the user increases the user control for the tempo of music items, the instant invention will adjust its rules by raising the importance of that classification parameter. This will then lead to a new similarity playlist that contains more items with a tempo that is close to that of the currently selected music item. Preferably, the selection and weighting of a particular musical feature, classification parameter of a current music item will be used in a relative manner by the instant invention. Note that a user-initiated increase in the importance of the "tempo" matching parameter does not mean that the user desires music items with a higher tempo in his or her playlist. Such a selection preferably indicates that the user prefers more music items in the playlist that have a similar tempo as that of the current music item. The user will preferably be able to accept or reject the proposed similarity playlist or, provisionally accept it and listen to some or all of the included songs, before deciding whether or not to keep it.

According to a preferred embodiment, the instant invention preferably begins with the activation of the digital media management program. This program will preferably be stored on a personal computer that has access to the digital audio content of the user. A first aspect of the instant invention will preferably be carried out on a user's personal computer and will utilize the user's music database to generate a song model for each music item stored in that database. The user will preferably be presented with a graphical user interface that provides access to the functionality of a media management program, e.g. sorting, storing, and archiving digital music files.

The media management program will preferably allow the user to import new music items into an existing media collection. When a new music item is imported, the media management program will preferably automatically assign an ID to each imported music item - the ID being intended to provide a better localization of the music items within the database. Thus, in the preferred embodiment, each music item in the database will have a unique ID.

In the next preferred step, the instant invention will perform an analysis of the imported digital music items, the purpose of the analysis being to determine their musical characteristics. This analysis and the steps associated therewith provide the foundation for the similarity playlist generation and adaptation process. The analysis will preferably begin by generating an audio signature of a base music item. This audio signature is preferably primarily a data structure that contains low level, mid level and high level features extracted from a music item. The higher in the feature hierarchy of low, mid and high a feature is, the more likely it will be associated with some directly perceptible characteristic of the music. For example, the low level features tend to represent characteristics of the source file. These features will preferably be obtained by band separating the audio content and by saving a value per band at predetermined time intervalls, for example every 10 ms or 30ms. Additionally this process might be repeated throughout the music item. Thus, in the preferred embodiment, the instant invention creates a vector for every unit of time. The low level features might be selected from the well known MPEG-7 standard, wherein there are seventeen temporal and spectral parameters specified that can be used to describe audio. These parameters are divided into the following groups:
- Basic: Instantaneous waveform and power values;
- Basic spectral: Log-frequency power spectrum and spectral features ;
- Signal parameters: fundamental frequency and harmonicity of signals;
- Temporal Timbral: Log attack time and temporal centroid;
- Spectral Timbral: specialized spectral features in a linear frequency space; and
- Spectral basis representations: features used in conjunction for sound recognition for projections into a low-dimensional space.

In a next preferred step the instant invention will further calculate the mid level features. The mid level features will preferably be derived from the low level features. For example LogLoudness is a low level parameter which measures the loudness progression of audio material. An example of a mid-level parameter related or derived from the LogLoudness parameter would be a parameter that is based on statistical calculations of the LogLoudness. The mid-level parameters also do not have an intuitive meaning to a user.

The high level parameters will also preferably be derived from previously generated parameters preferably the mid-level features. The high level parameters, however, will tend to be meaningful to a user. For example a high level feature might be the distribution of the notes or the rhythmical course over the whole music item. The totality of the low level, mid level and high level features that describe a song will be referred to as the audio signature. The audio signature will tend to contain most of the temporal information of the music item and, therefore, the audio signature file itself may be quite large.

To reduce the size of the audio signature a number of further calculations will preferably be initiated. These calculations will preferably use the audio signature data as starting point. One calculation or set of sequential calculations is called adaptation, where the measured values are temporally summed. That is, in a preferred embodiment, the feature values that have been calculated for multiple bands are combined into a single representative value by, for example, calculating their mean, variance, median, mode, or some other single value. As a result, the instant invention generates holistic models of the songs in the database which are then used in the formation of similarity playlists.

The second preferred calculation is the aspect classification. Aspects are attributes of the audio content that describe its musical characteristics. These aspects are divided into those that are easily comprehensible by a novice user and features that describe the deeper musical characteristics of the audio content. Aspects that are more accessible and comprehensible to the user might include, for example, Instrument Density, Solo Instrument, Mood, Music Color, Percussiveness, Singing (vocals), Style, and Tempo. To each aspect a number of different classes might be connected. For example, the aspect Instrument Density might take the values of sparse and full. Mood might have classes such as aggressive, calm, danceable, happy, and melancholic. In the preferred embodiment, the aspect classification will produce a histogram which illustrates, per temporal unit, to which class the currently analyzed music item belongs to. The histogram will preferably show, over the running time of the music item, that, for example, 60% of the content item contains vocals and 40% does not.

The classification step will preferably assign probabilities within each time intervals of the songs, each probability representing the likelihood that the song belongs to an associated song class. Preferably, the song classes will be defined in terms of calculated (or assigned) musical characteristics which have been obtained via an artificial intelligence methodology.

The result of the aspect classification step will preferably be a collection of values that represent the probability that the song belongs to each of several different classes. The aspect profile and the transformed values (from the adaptation step) will then preferably be stored in a song model which is a compacted version of the data calculated from the song itself, e.g., it might contain histograms and other summary statistics.

This analysis will preferably be carried out for every item stored in the audio database and the song model will then preferably be stored together with the IDs of the audio items in a separate song model database or together with the music item in the audio content database.

In a next preferred step the user will select an initial music item - the base music item. The instant invention will then determine if a song model corresponding to the selected music item has been stored previously. If not (e.g., if this is the initial run of the program or the selected music item is new), the above described analysis steps will be implemented. However, in the preferred embodiment the selected music item and the corresponding song model data will already be a part of both databases - the song model database and the content database.

As a next preferred step the instant invention will generate an initial similarity playlist and present it to the user. The instant invention will preferably access the song model database and the song model data. The song model data of the currently selected music item will be used to calculate a distance from the selected song to the other songs in the database. Although it is preferable that a Euclidean (or other) distance be calculated, it is also possible that a playlist might be assembled based on song ontology, wherein the individual features of each song are considered in the generation process and any individual weighting of such features is incorporated in the process of selecting new music items. Music items whose song model data is similar to or is lying within an acceptable range of the characterizing values of the base music item will preferably be selected and inserted into the initial similarity playlist.

Preferably, the music items that are determined to be in the similarity playlist will be sorted according to a percentage of similarity to the base music item. The generation step, relying as it preferably does on precomputed values, will be able to quickly return a playlist from even a very large database. Additionally, the instant invention will preferably provide the user with a graphical user interface that contains the information about the base music item, and the contents of the current similarity playlist together with a value that illustrates the degree of similarity between each playlist item and the base music item.

In a next preferred step , i.e.,- the parameterization step, the user will signal to the instant invention which features / classification parameters of the currently selected music item he or she prefers or dislikes by setting a personal preference value for each classification parameter. These preference values and the classification parameter values will be used to further refine the playlist by generating a target selection model containing the user preference value, the classification parameters and the classification parameter values. The user will preferably be able to indicate this to the instant invention by interacting with the graphical user interface. The musical feature section will preferably allow the user to communicate his desire to, for example, include more items that have approximately the same or similar tempo as the base music item. The user might also elect to include more (or fewer) items with female singing, if the base music item contains female vocals. The modified personal preferences will preferably be used to produce a new parameterized similarity playlist that contains more items of the sort preferred by the user. The classification step will, in an embodiment be initiated with the results preferably being displayed dynamically as the user modifies the selection from criteria.

The actual search for similar items will preferably proceed as follows. The instant invention will begin by reading the personal preference values which will preferably take the form of a user modifiable representation of the classification parameters of the song model that has been calculated from the initial music item. Next, a search query will preferably be created and used to retrieve song models from the song model database. A distance measure (or degree or similarity, etc.) will preferably be calculated from each song model in the database to the current song model. The user will be able to control the search preferably through the use of a specialized graphical user interface designed for that purpose. The initial similarity playlist will preferably be created using all of the musical features of the base music item as starting point, with the features all given equal weight. Subsequent searches will preferably use the weighting scheme or preferences specified by the user.

As a next preferred step the instant invention will preferably create a new parametrized similarity playlist and present it to the user. Preferably, the items in this list will all be, probabilistically speaking, similar to the base music item according to the preferences specified by the user. The distance measurement will preferably be determined automatically from the song model as has been described previously.

In addition to the parameterization step, the user will also preferably be able to refine the similarity playlist by initiating an optional filtering step. The filtering process will allow the user to refine the similarity playlist even further. The user will preferably be provided with a graphical user interface that allows specification of user preferences regarding both the metadata associated with the base music item and regarding the song model data extracted from the same item. For example, the user will preferably be able to indicate that he or she prefers only songs from the artist that recorded the base music item, or only songs that exhibit a happy mood, or only songs from a particular release year, etc. In general, the filtering step allows the user to further refine the latest similarity playlist produced by the instant invention. The filtering step will preferably not initiate a new classification computation but instead it will use the existing calculation results.

The user will preferably be given some additional degree of control over the similarity playlist generated according to the instant method. For example, the user might be allowed to specify the length of the similarity playlist and whether or not the similarity playlist is to be updated/renewed as new music items are added to the music content database. The user will preferably be allowed to change the musical feature, parameter preferences used in the similarity playlist generation at any time. Furthermore, the instant invention will preferably automatically update the selectable musical features displayed in the graphical user interface depending on the currently selected music item.

It should be clear that an approach such as this would be a tremendous aid to the user who wants to enhance enjoyment of the items stored in an audio database by automatically generating similarity playlists that contain music that matches the feature preferences of a base music item and of the user. Additionally, since the music items will preferably be analyzed only once (e.g., at the time they are added to the audio database), the instant invention can be implemented with even very modest computing power. Thus, similarity playlist generation, parameterization, and filtering can potentially be implemented in virtually any computing device, either with the song model database stored locally or connectible through a network connection for example via W-LAN.

The foregoing has outlined in broad terms the more important features of the invention disclosed herein so that the detailed description that follows may be more clearly understood, and so that the contribution of the instant inventors to the art may be better appreciated. The instant invention is not limited in its application to the details of the construction and to the arrangements of the components set forth in the following description or illustrated in the drawings. Rather the invention is capable of other embodiments and of being practiced and carried out in various other ways not specifically enumerated herein. Additionally, the disclosure that follows is intended to apply to all alternatives, modifications and equivalents as may be included within the spirit and the scope of the invention as defined by the appended claims. Further, it should be understood that the phraseology and terminology employed herein are for the purpose of description and should not be regarded as limiting, unless the specification specifically so limits the invention.

### BRIEF DESCRIPTION OF THE DRAWINGS

Other objects and advantages of the invention will become apparent upon reading the following detailed description and upon reference to the drawings in which:

Figure **1** depicts the general environment of the instant invention.

Figure **2** illustrates an overview of the steps associated with processing a music file.

Figure **3** contains a detailed illustration of the preferred steps and the data involved in the generation of an initial similarity playlist.

Figure **4** illustrates a preferred schematic of the process of generating an initial similarity playlist.

Figure **5** contains a schematic illustrating a preferred use of the parameterization step of the instant invention.

Figure **6** contains an illustration of a preferred order of processes of the instant invention when both the parameterization and filtering steps are used.

Figure **7** illustrates a preferred general workflow suitable for use when generating the song model data.

Figure **8** illustrates the preferred operating logic of the parameterization step of the instant invention.

Figure **9** depicts a preferred operating logic of the instant invention when presenting the GUI for the filtering process to the user.

Figure **10** depicts a graphical illustration of a process step of the feature classification module.

Figure 11 illustrates a preferred graphical user interface of the instant invention during the parameterization step.

Figure **12** contains an illustration of the embodiment of Figure **11** as it might appear when it is initially presented to a user.

### DETAILED DESCRIPTION OF THE PREFERRED EMBODIMENTS

Referring now to the drawings, wherein the reference numerals indicate the same parts throughout the several views, there is provided a system and method for efficient maintenance of a large number of music items, via the creation of similarity playlists. The instant invention preferably utilizes a playlist generation method that improves on the prior art methods by utilizing the musical characteristics of the music items. The instant invention will preferably enable the user to generate a similarity playlist without requiring excessive computing power. Furthermore, the instant invention will preferably allow the user to parameterize the content of a similarity playlist by providing preferences (or dislikes) regarding individual musical features of the music item. The parameterized playlist will preferably be generated in real time and the instant invention will furthermore allow the user to perform this parameterization step repeatedly. The instant invention will continually provide playlists as the user modifies the search criteria. The user will also preferably be able to initiate a filtering step to further refine a parameterized or initial similarity playlist.

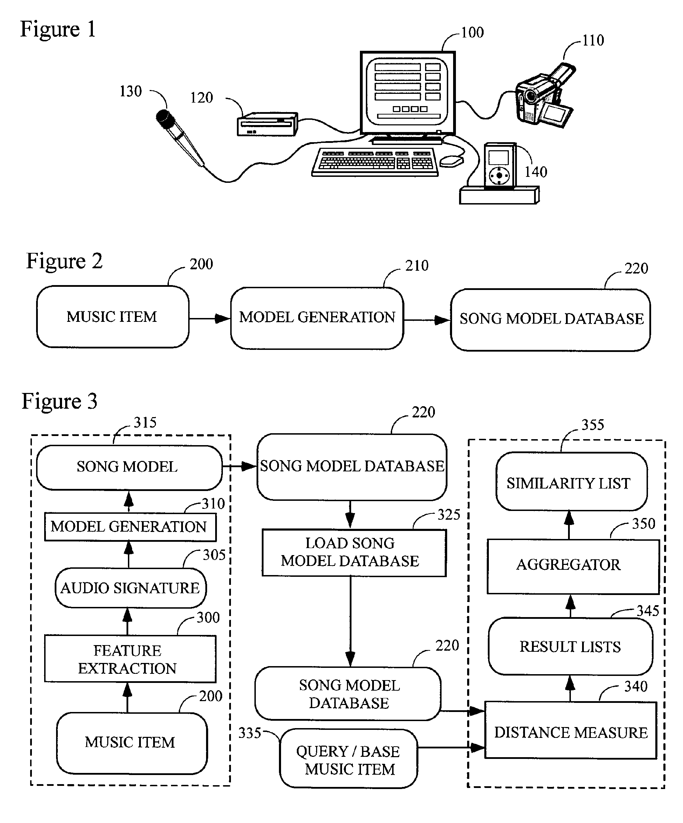

As is generally indicated in Figure **1**, at least a portion of the instant invention will be implemented in form of software running on a user's computer **100**. Such a computer will have some amount of program memory and nonvolatile storage (e.g., magnetic disk, flash RAM, etc.), whether internal or accessed via a network, as is conventionally utilized by such units.

Additionally, it is possible that an external camera **110** of some sort will be utilized with and will preferably be connectible to the computer so that video and/or graphic information can be transferred to and from the computer. Preferably the camera **110** will be a digital video camera, although that is not a requirement, as it is contemplated that the user might wish to utilize still images from a digital still camera in the creation of his or her multimedia work. Further, given the modern trend toward incorporation of cameras into other electronic components (e.g., in handheld computers, telephones, laptops, etc.) those of ordinary skill in the art will recognize that the camera might be integrated into the computer or some other electronic device and, thus, might not be a traditional single-purposes video or still camera. Although the camera will preferably be digital in nature, any sort of camera might be used, provided that the proper interfacing hardware between it and the computer is utilized. Additionally, a microphone 130 might be utilized so that the user can add voice-over narration to a multimedia work and a CD or DVD reader / burner **120** could be useful for storing user data/content on optical disk.

Additionally, a portable music device **140** such as an MP3 player or other portable device capable of playing digital music will preferably be connected or connectible to the computer to allow the user to exchange digital music items between the computer and the portable device. In some instances, the portable music device **140** will have an integrated loudspeaker through which digital music items may be performed for a listener. In other instances, the device **140** will likely have at least an electronic connection which is designed to receive a connector for a pair of headphones (e.g., a headphone jack), or an external or internal wireless module (e.g., Bluetooth or WiFi), or a stereo or other connector that is suitable for electronic communication with an external amplifier and/or speaker, etc.

Turning next to Figure **2**, this figure illustrates a high level overview of the steps associated with the initial processing of a music item according to the instant invention. As is indicated in this figure, a music file, preferably a digital music item **200**, will be provided to the instant invention, preferably via a user selection. In a next preferred step the model generation **210** procedure (which is discussed in greater detail below) will be performed on the music item. The output from the model generation step **210** will be a song model that contains a description of the musical features - the classification parameters and the associated values of the selected music item **200**, preferably in a highly compressed form. The song model data will preferably then be stored in a song model database **220** for subsequent use as described below. Preferably, the music items will be stored in a separate database, i.e., an audio content database. However, it is certainly also possible that both the music item and the corresponding song model data could be stored together in a single database. The generation of the song model from a selected music item is a key step in the operation of the instant invention.

Figure **3** contains an illustration of the preferred processes and the data involved in the generation of an initial similarity playlist. In this figure, the rounded-rectangle frames represent entities that are utilized or produced by the process, whereas rectangular frames represent activities. As has been mentioned in connection with Figure **2** a starting point of the instant invention will typically be the music item **200**. A feature extraction step **300** will preferably be performed on the music item **200**. During this step some low level quantities will typically be extracted from the musical work. It should be noted that the features that are extracted may be associated with signal properties that have little meaning musically. The values preferably will be obtained by segmenting the musical item into short (e.g., about 10 ms to 30 ms) windows and calculating a value within each such window. This process will preferably operate to create a vector for each unit of time. The low level features might be selected from among the parameters of the well-known MPEG-7 standard which includes seventeen temporal and spectral parameters that are used to describe digital audio. These parameters are divided into the following groups:
- Basic parameters: Instantaneous waveform and power values
- Basic spectral parameters: Log-frequency power spectrum and spectral features
- Signal parameters: Fundamental frequency and harmonic content of signals
- Temporal Timbral parameters: Log attack time and temporal centroid
- Spectral Timbral parameters: Specialized spectral features in a linear frequency space
- Spectral basis representations: A number of features used in conjunction with sound recognition for projections into a low-dimensional space.

After the instant invention has extracted the low level features and created the vector of data values, an audio signature **305** will preferably be generated. To generate this signature, the instant invention will preferably calculate mid level features, which are typically derived from the low level features. For example, LogLoudness is a low level feature which measures the loudness progression of audio material. An example of a mid-level feature that might be derived from LogLoudness would be a feature that is obtained by applying a statistical calculation to the series (e.g., a mean, running average, etc.). The mid-level features will tend to have more relevance musically than the low level features.

In a next step, the instant invention will preferably generate high-level features which will also be derived from previously generated or extracted data. For example, the mid-level features (and/or low-level features) might be used to form the high-level feature set. The low-level features, the mid-level features and the high-level features will preferably be chosen to describe in some sense a music item in mathematical terms, the totality of which will be referred to as the audio signature hereinafter. Since the audio signature will preferably contain much of the temporal information about the music item (e.g., the low level features), the audio signature will tend to be rather large.

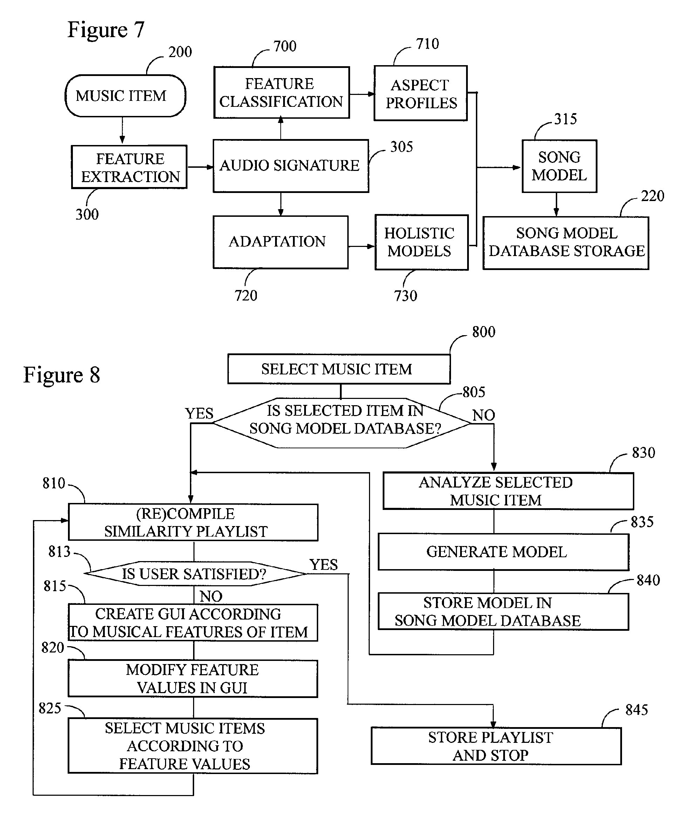

In order to reduce the size of the audio signature, it is preferred that this data be compressed in such a way as to keep as much information about the song as possible. After the signature is composed, the instant invention will initiate a model generation step **310**. This step uses the data in the audio signature to generate a song model **315**. The song model generation will be described in more detail in connection with Figure **7**, however the general process involves performing two types of calculations on the data stored in the signature. The first will preferably be an aspect classification which condenses the data stored in the audio signature into aspect profiles that contain data that describes the characteristic of the item's musical features. The second calculation - the adaptation - will preferably be a transformation of the data stored in the audio signature into a holistic model representing the music item. The measured values of the features (low level, mid level, high level) will preferably be temporally summed. That is, in a preferred embodiment, the feature values that have been calculated for multiple bands are combined into a single representative value by, for example, calculating their mean, variance, median, mode, or some other single value. The results of both calculations will preferably then be stored in the song model **315** which is, in turn, preferably stored in the song model database **220**.

The song model database **220** will preferably contain all of the song models **315** for each item in the audio database. The song model database and the audio content database are preferably related by an ID value which is unique to each music item and its song model.

In some preferred embodiments the instant invention will begin with a query/ base music item **335**, where the base music item is a song that has been selected by the user and provides a starting point for the assembly of a similarity playlist. For purposes of specificity in the text that follows, it will be assumed that the query/base music item will already have been analyzed and its song model is already stored in the song model database.

The instant invention will next preferably access the song model database **325** and locate and read the song model that corresponds to the query song. Next, the instant invention will preferably calculate a distance measurement **340** using the song model data from the query music item and each of the other music items in the database. Since the song model data will preferably have been previously compressed, the distance measurement will likely be calculated very quickly to produce result list **345**. The result list **345** represents a listing of each item in the audio database together with a numerical or other value that describes the degree to which that item is similar to the query item. Next, the instant invention will preferably perform an aggregation step **350** which might involve sorting the results list based on similarity, with the songs most likely to be similar being listed first. The instant invention will then preferably select a predetermined number of music items from that sorted list that are most similar to the query song. These selected items are the initial similarity playlist **355**.

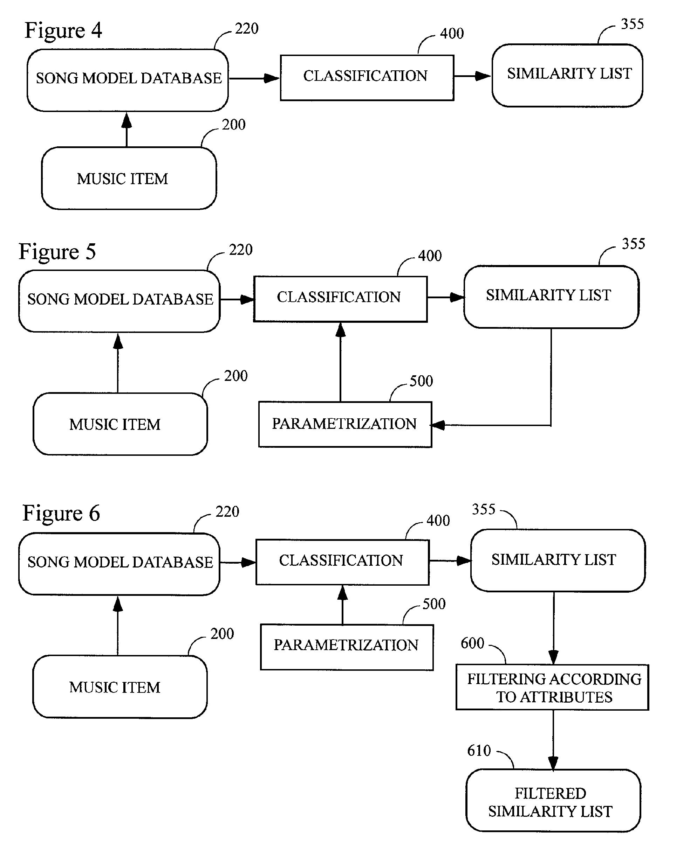

Turning next to Figure **4**, this figure contains a high level schematic of the steps that are required to obtain an initial similarity playlist from a chosen music item **200**. The user will select a query item **200**. The ID associated with the music item **200** will preferably be located within the song model database **220**. If this ID cannot be found, the instant invention will generate the respective song model data as has been described previously. The model data will then preferably be stored in the song model data in the song model database. If the music item **200** has been previously analyzed, its model data will be read from the song model database. Either way, in the preferred embodiment, the instant invention will then perform a classification **400** which will yield an initial similarity list **355** as output. During this step the song model data of the currently selected music item will preferably be compared to the song model data stored in the database and the instant invention will provide a result list **345** which will then be sorted with the ten most similar items becoming the initial similarity list **355**. Of course, the actual number of items chosen to be in the initial similarity list could be any value (greater than or less than ten) and might be user selectable. Additionally, it should be noted that the user might wish to generate a similarity playlist that contains music items that are least similar to the selected current music file. This would then be an "opposite" playlist.

Turning now to Figure **5**, this figure illustrates how a preferred parameterization step, which will allow the user to shape the initial similarity playlist more to his or her liking, might be incorporated into the instant invention. The parameterization **500** allows the user to fine tune the similarity playlist by utilizing the musical features - the classification parameters of the currently selected music item. In a preferred embodiment, the graphical user interface will provide the user with selection options that are based on the musical features of the query item. For example, the user will preferably be able to signal his preferences by increasing or decreasing a control for "guitar", or by increasing or decreasing a control for "vocals", thereby providing a personal preference value for each classification parameter, each of which will then tend to cause the instant program to favor (or disfavor) guitar-based songs and vocal-based songs, respectively. These sorts of options are presented for purposes of illustration only and those of ordinary skill in the art will readily be able to devise others. Each selection made by the user will preferably cause the similarity playlist to be recomputed and presented to the user.

Each interaction of the user with the GUI will preferably result in a new classification **400** being initiated. Each new classification will preferably generate a new similarity list.

In another embodiment the instant invention will utilize a weighted similarity in the computation of the playlist. Initially, it is preferred that the weights (which correspond to musical features) be equal initially. Then, the user will be given the option of varying the weights to shape the resulting playlist. By signaling the preference for a particular musical feature (e.g., the user might elect to increase the weight associated with the "tempo" classification parameter), songs in the database that have a classification parameter value close to that of the query music item will be given higher priority in the formation of the playlist. Note that an increase in the importance of "tempo" does not mean that the user desires music items with a higher (faster) tempo, but rather that such a selection signals to the instant invention that the user prefers more music items with a similar tempo as that of the query item in the playlist.

It should be noted that the similarity playlist is a listing of the associated music items and not necessarily a compilation of the associated music files. The listing will preferably provide information concerning where the music items are stored.

Figure **6** illustrates the filtering step which will preferably be available as part of the similarity playlist refinement process. As might be suspected, this step allows a user to establish criteria that are used to eliminate playlist members. Preferably, this step will not expand the number of items in the current playlist version but instead will only reduce the count by eliminating items that fail to meet one or more of the criteria. The resulting playlist **610** will then be available for further refinement by the user if desired. In the filtering step, the user will start again with the current similarity playlist and select and/or deselect individual musical features - classification parameters or metadata properties of the currently selected music item to be used in screening the playlist items. For example, the user might desire only music items from the years 1990 through 1997 and only rock music items. The instant invention will then use these criteria to filter the similarity playlist (step **600**) and remove those music items from the list that do not meet the user's criteria. Additionally it might also be possible that the instant invention will provide those music items that do not meet the user's criteria with a lower order priority - i.e. that these music items will still be a member of the playlist but with a lower ranking in the playlist. The filtering will preferably be performed by starting with the current similarity list/song models and then comparing the user selection/de-selection of individual metadata or musical features with the corresponding features of the music items stored in the similarity list.

Turning next to Figure 7, this figure illustrates the preferred steps that will be utilized when generating the song model data. As has been described previously, the user will select a music item **200**. If this music item has not yet been analyzed, the song model data will be obtained via a feature extraction **300**. As was indicated previously, the feature extraction step preferably provides low-level features of the music item as a function of time. Mid-level features will typically be calculated from the low-level features and high-level features (e.g., the rhythmical course or the distribution of the notes) will be derived from the low-level and/or mid-level features. The mid-, low-, and high-level features will preferably be stored in an audio signature file **305**. The signature file will preferably be compressed using the feature classification **700** option, wherein aspect profiles **710** that have been obtained by application of automated feature learning / extraction algorithms are integrated with the features of the music item. Such an aspect profile will preferably contain two or more classes (e.g., vocals/no vocals) for each individual feature of the item. In the preferred arrangement, the feature classification step will assign the music items to one of the available classes within each time window. Additionally, a probability value will preferably be determined for each time interval.

In some preferred embodiments the probabilities will be calculated using statistical discriminate analysis (continuous and/or discrete), wherein linear combinations of features (e.g., tempo, center frequency, instruments present, vocals present ("YES"/"NO"), etc.) are used to separate multivariate data points into different groups. In other instances, centroid-based distance calculations could be used to determine the distance (and associated probability) between the characteristics measured inside each window and the centroids of the different groups. Those of ordinary skill in the art will readily be able to devise alternative measures.

However they might be calculated, the probabilities so obtained represent the likelihood that a given music work belongs to a particular classification (or grouping, etc.) of songs (e.g., rock, jazz, etc.). The probability will preferably be calculated by comparing the data values that have been extracted from a particular music item with corresponding data items that are characteristic of each group, which might be predetermined by the instant inventors (or others) or calculated previously (or on the fly) from songs in each classification.

The adaptation step **720** is the second process that might be applied to the audio signature. In this step, the data values will then be transformed into summary statistical quantities such as variance, mean, median, etc., which may or may not be normalized. As a result, the adaptation step provides a holistic model **730** for each music file. The aspect profile **710** and the holistic model **730** of a music item will then preferably be stored in the song model **315** of that particular music item, the song model being a storage container for the data describing the compressed music item. The song model will then be stored in the song model database **220** with an associated unique ID.

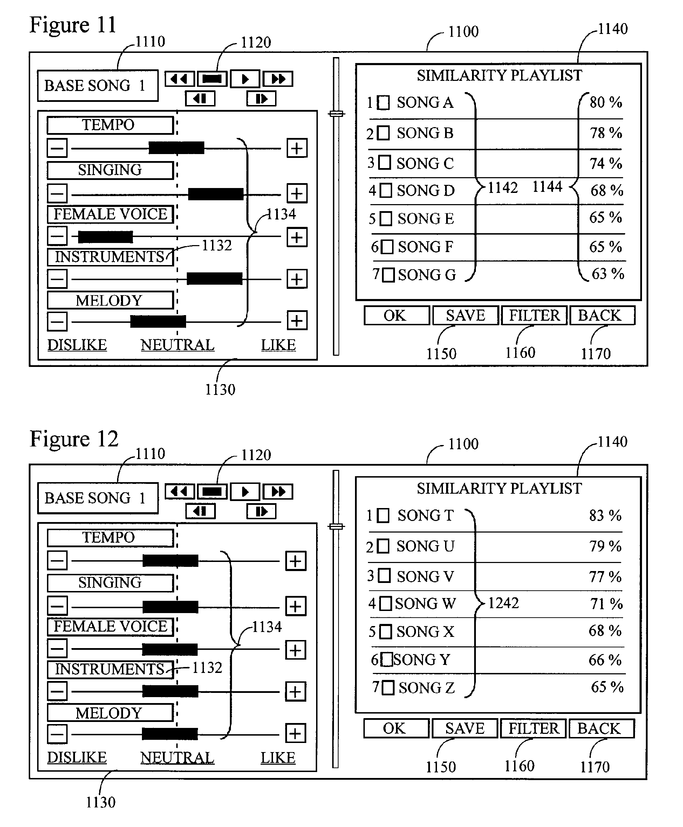

Turning next to Figure **8**, this figure depicts in greater detail a preferred general operating logic suitable for use with the parameterization step. In a first preferred step the music item will be selected by the user **800**. If the music item is not in the database (the "NO" branch of decision item **805**), a song model will be generated (step **835**) and stored in the song model database (step **840**). Otherwise, the instant invention will proceed to compile an initial similarity playlist according to the methods discussed previously (step **810**). If the user is satisfied (the "YES" branch of decision item **813**) the playlist will be stored and no further processing will be performed. Otherwise, the "NO" branch will be taken and a GUI will be presented to the user (step **815**) with the GUI possibly differing depending on the feature set of the base music item selected in step **800**. The graphical user interface will preferably contain controls that allow a user to indicate that more or less of a specific musical feature (e.g., its weight may be increased or decreased) is desired. By interacting with these controls, the user will be able to specify his or her playlist preferences, by defining personal preference values using the selected music item as a starting point (step **820**). In a preferred embodiment, the user will select one of the on-screen parameter representations and then indicate whether more or fewer songs that have a comparable parameter value are to be included in the new playlist. Of course, those of ordinary skill in the art will recognize that the selection of an on-screen representation of a parameter and modification of the user preference might be accomplished with a single click of the mouse (e.g., by "grabbing" and moving a slider as is described below in connection with Figures **11** and **12**).

The modified weights for each classification parameter and the classification parameter value form a target selection model that will then be used in a recomputation of the distances of each music item from the selected music item, thereby revising the playlist (step **825**). The user will preferably be able to repeat the above-described process any number of times. Additionally, the user may choose to select a different base music item during this process and have an alternative playlist be determined.

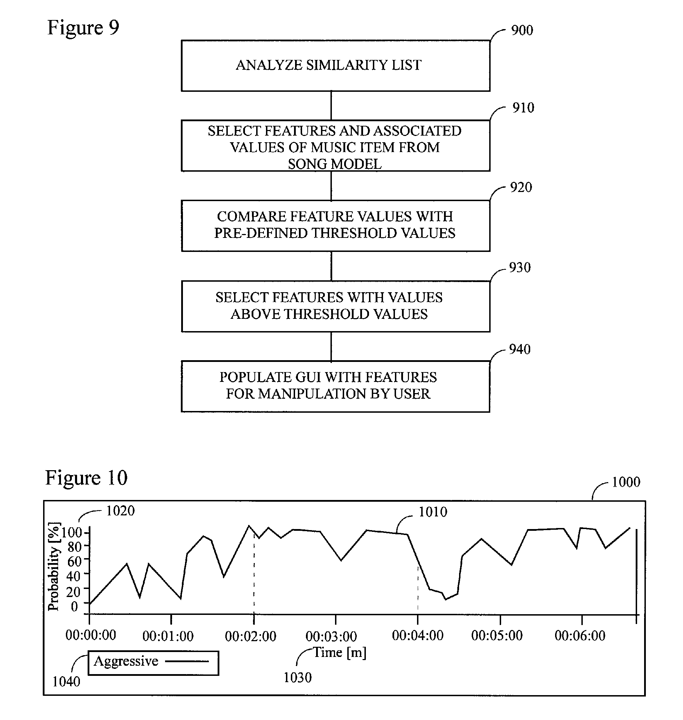

Turning now to Figure **9**, this figure illustrates a preferred high level operating logic of the instant invention when providing the graphical user interface for the filtering step. First, the instant invention will preferably begin by analyzing the similarity list **900**, which might be either the initial similarity playlist or a previously parameterized playlist.

In the next preferred step, the instant invention will preferably access the song model associated with the currently selected music item and extract some or all of its musical features, the classification parameters and the associated data values. In the next preferred step, the instant invention will compare the data values for each of the classification parameters with a pre-defined threshold value **920**, a goal of this step being to present the user with the musical features that are most relevant to the music item.

As a next preferred step the instant invention will select those classification parameters that exceed the threshold value **930**. In the next preferred step the instant invention will integrate the parameters that exceed the threshold into the graphical user interface to be potentially modified by the user during the filtering step **940**. Additionally, the instant invention also will preferably extract metadata from the music item and presents that metadata in the graphical user interface as well.

Turning next to Figure **10**, this figure contains a schematic illustration **1000** of one preferred step of the feature classification process. This sort of graphical illustration will preferably be provided for each music item and each musical feature (aspect). In this figure, the horizontal and vertical axes are time (**1030**) and probability (**1020**), respectively. The length of the time axis **1030** preferably reflects the total run time of the music item and the probability value **1020** represents the probability that the music item corresponds to a currently selected class of a musical feature within the indicated time window. In the example of Figure **10**, the musical feature, parameter is "mood" and its class groupings are "aggressive" and "calm" **1040**. Note that, for simplicity in the presentation, only the "aggressive" curve has been presented. Of course, the "calm" curve would tend to resemble the inverse of the "aggressive" curve, i.e., windows that have a high probability of falling into the "aggressive" group will tend to have a low probability that they belong within the "calm" group. The curve **1010** illustrates the changing levels of "aggression" in the music at various points in the run time of a particular music item.

Given a curve like that in Figure **10** for a particular musical item, the probabilities in that curve could then be reduced to a single probability (i.e., the probability that this musical work falls into the group for which the calculation was performed) in many different ways. One preferred embodiment would be to calculate the average probability over all of the time windows, where "average" should be broadly construed to include mean, median, mode, geometric mean, etc. Another approach might be to calculate the minimum or maximum probability or a quantile-based value (e.g., the upper quartile probability). In other embodiments, the entire curve will be used to determine some measure of diversity, similarity, or other characterization or comparison between the subject music item and another. Those of ordinary skill in the art will understand how any number of time-series or other methods might be applied to curves of the sort illustrated in Figure **10** to assign a music item to a group or determine the difference between two music items.

Coming next to Figure **11**, this figure illustrates a preferred graphical user interface of the instant invention as it will appear during the parameterization phase. As is generally indicated in this figure, the user will preferably be presented with a computer screen display **1100** that contains a number of different items of information that can be used to shape the resulting playlist. The song name and/or the computer file name of the selected base music item **1110** is displayed next to on-screen transport controls **1120** that are preferably styled to resemble their counterparts on a conventional VCR or DVD player and provide a way for the user to use a computer mouse to control the playback of the base music item and view the contents of the similarity playlist through the use of functions such as rewind, play, stop/record, fast forward etc. Those of ordinary skill in the art will recognize that such transport controls **1120** are commonplace and well known in multimedia editing programs. Furthermore the user will preferably be presented with a section of the GUI **1130** that contains representations of the parameters that control the generation of the parameterized similarity playlist. The content of the parameter section **1130** will preferably be based on the data/song model of the currently selected base music item **1110**, wherein the most relevant features / parameters of the music item will be presented to the user for review. In the example of Figure **11**, there are user controls (i.e., sliders **1134**) for the classification parameters tempo, singing, female voice, instrument density **1132** and melody. By interacting with the sliders **1134** the user will be able to communicate his or her preferences with respect to the features that are present in the base music item **1110** by varying the positions of the sliders.

In particular example of Figure **11**, the user has indicated a personal preference for songs that contain an instrument density **1132** that matches that of the base music item **1110** by positioning the associated slider to the right toward the plus sign (i.e., the user "LIKES" the instrument density of the base song **1110** and wishes to include more songs in the playlist that have a similar quality). Similarly, the user has indicated a dislike for the "FEMALE VOICE" parameter. This means, for example, that if the base music item **1110** has a female vocalist (i.e., the parameter value for "FEMALE VOICE" is "YES"), the user would be showing a negative preference for a vocalist of that gender and, consequently, a preference for non-female vocalists or for songs that have no vocalist at all. On the other hand, if the "FEMALE VOICE" parameter value in the base music work **1110** is "NO" (i.e., there is no vocalist or the vocalist is male), a slider to the left of the neutral line would indicate that the user does not like that aspect of the base music work **1110** and desires that the modified playlist should be weighted toward songs that have a female vocalist. Of course, sliders that are situated near the neutral line will be associated with parameters that are given no special weight in determining the similarity between the base music work and the other songs in the music database. The term "preference weighting" will be used hereinafter to describe the weight or importance assigned by the user to a particular song parameter.

In another section of the graphical user interface, the user will preferably be presented with the similarity playlist **1140**. The similarity playlist displays the music items that have properties that most closely match the preferences selection of the user. The target selection model for this example (i.e. the model against which music items in the database will be compared in forming the similarity value) is comprised of the five classification parameters ("TEMPO", "SINGING", "FEMALE VOICE", etc.) and their associated parameter values in the base music item **1110** (e.g., TEMPO=100 BPM, SINGING = "YES", FEMALE VOICE="NO", etc.) as weighted by the preferences of the user as measured by the positions of the sliders **1134**,

In this figure, the user-shaped playlist **1142** is displayed, with each song in the playlists **1142** being accompanied by a percentage value (0%-100%) that represents the calculated similarity **1144** between that song and the base song or, more generally, the similarity between each song and the current selection criteria as weighted by the user's preferences. The similarity playlist **1142** will preferably be generated and updated on the fly as the user manipulates the controls in the parameter section **1130**. If the user is satisfied with the current playlist and wants to store it for a later time he or she will be able to do so, preferably by activating the save control **1150**.

Finally, Figure **12** illustrates the embodiment of Figure **11** as it might appear when a user first encounters it. In this preferred arrangement, the sliders **1134** will all be set to a "neutral" position (e.g., in the center of the slider) to indicate that the parameter values associated with the current base music work **1110** are to be given equal weight in determining the likelihoods or similarity values that are preferably used to construct the playlist **1242**. Note that, although it might appear otherwise by comparison of Figures **11** and **12**, it is certainly possible that the initial playlist (songs "T" through "Z", Figure **12**) might contain some or all of the same songs as are found in the modified playlist (songs "A" through "G", Figure **11**), e.g., songs "A" and "T" (or "A" and "U", etc.) could actually be the same song title. Additionally, it should be noted that each of the parameters that are displayed in the graphical user interface (e.g., "TEMPO", "SINGING", "FEMALE VOICE", "INSTRUMENTS" and "MELODY") might be different if a different music item is selected. That is, in the preferred embodiment the parameters that populate the graphical user interface will represent the most significant parameters of the selected music item (e.g., as determined by comparison with a significance threshold).

By selecting the filter control **1160** the user will be able to filter the songs in the parameterized similarity playlist as has been described previously. Additionally, by activating the "back" button **1170** the user will be able to go back one step to select another base music item. It is also preferred that the user will be given the option to select a music file from the similarity playlist to be the new base music item, thereby providing a starting point for the generation of a new playlist.

### CONCLUSIONS

Of course, many modifications and extensions could be made to the instant invention by those of ordinary skill in the art. For example, in one preferred embodiment the user will be able to access an online database of digital music items and have a playlist generated from those items based on the user's selected song. Such an approach could further be enhanced by allowing the user to sample the content of the resulting similarity playlist and, additionally, to purchase content that he or she likes but does not own. Additionally the concept of parametrization and filtering of the similarity playlist might be implemented within an online environment, wherein both the song model database and audio content database are stored online and the user accesses these databases via a network connection.

Note that the term "database" should be broadly construed herein to include traditional hierarchical, relational, and flat databases as well as databases that consist of multiple files and/or that are resident on one or more computers.

Further, although in the preferred embodiment the ID that is assigned to each musical item in the database will be unique and numerical (e.g., a sequential count, a hashed value based on the song name, genre, etc.) those of ordinary skill in the art will recognize that there are many alternative ways to implement such an ID assignment process.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those of ordinary skill in the art, without departing from the spirit of the inventive concept the scope of which is to be determined by the following claims.

## Claims

1. A method performing music for a user, comprising the steps of:
a. accessing a database containing a plurality of music items, wherein
each of said music items has a song model associated therewith,
each of said song models is comprised of a plurality of classification parameters,
each of said song models is stored in a computer readable form, and
each of said plurality of classification parameters represents a musical aspect of said associated music item;
b. choosing at least two of said music items, thereby forming an initial playlist;
c. providing said initial playlist to the user;
d. requiring the user to select a music item from among said provided initial playlist, said selected music item having a selected song model, a plurality of classification parameters, and, a corresponding plurality of classification parameter values associated therewith;
e. displaying to the user on a display device a graphical representation of each of said plurality of classification parameters associated with said selected music item;
f. interactively obtaining from the user via said graphical representation a selection of a classification parameter,
g. selecting a classification parameter value associated with said selected classification parameter;
h. obtaining from the user at least one personal preference value associated with said selected classification parameter;
i. performing steps (f) through (h) at least once, thereby obtaining at least one selected classification parameter, a corresponding at least one selected classification parameter value, and a corresponding at least one personal preference value;
j. forming a target selection model using at least said at least one selected classification parameter, said at least one selected classification parameter value, and said at least one personal preference value;
k. reading at least two of said stored song models, each of said read at least two stored song models being associated with one of said plurality of music items;
l. comparing said target selection model with each of said read at least two song models, thereby forming a corresponding at least two similarity values;
m. using said at least two similarity values and said at least one personal preference value to create an ordered listing of music items associated with said at least two read song models;
n. using said ordered listing of music items to create a similarity playlist; and,
o. performing at least two music items from said similarity playlist for the user, thereby performing music for the user.

2. The method of performing music according to Claim 1, wherein said initial playlist is comprised of at least two musically similar music items.

3. The method performing of music according to Claim **1**, wherein at least one of said displayed graphical representations of each of said classification parameters is associated with song metadata.

4. The method performing of music according to Claim **3**, where said metadata is selected from a group consisting of a genre, an artist, a year created, a song title, and a style.

5. The method of performing music according to Claim **1**, wherein at least one of said user graphical representations includes a "MORE LIKE THIS" parameter setting and a "LESS LIKE THIS" parameter setting.

6. The method performing music according to Claim **1**, wherein step (m) comprises the steps of:
(m1) using said at least two similarity values and said at least one personal preference value to either:
(i) exclude at least one of said at least two read song models from said initial playlist, thereby creating a filtered playlist of at least two music items,
or,
(ii) assign at least one of said at least two read song models a lower order priority in said initial playlist, thereby creating a filtered playlist comprised of at least two music items, and,
(m2) using said at least two similarity values and said at least one personal preference value to create an ordered listing of music items associated with said at least filtered playlist.

7. The method of performing music for a user according to Claim **1**, wherein step (m) comprises the steps of:
(m1) using said at least two similarity values and said at least one personal preference to create a weighted distance measure between each of said at least two read song models and said target song model, and,
(m2) using said weighted distance measure between each of said at least two read song models and said target song model to create an ordered listing of music items associated with said at least two read song models.

8. The method of performing music for a user, according to Claim 1, wherein said plurality of music items and said associated plurality of song models are both stored in said database.

9. A method performing music for a user according to Claim **1**, wherein step (a) comprises the steps of:
(a1) accessing a database containing at least two music items, wherein each of said at least two music items has a song model associated therewith,
each of said song models is comprised of a plurality of classification parameters,
each of said song models is stored in a computer readable form, and each of said plurality of classification parameters represents a musical aspect of said associated music item,
(a2) accessing a new music item not contained in said database,
(a3) calculating a new song model associated with said new music item, said new song model being comprised of said plurality of classification paramters,
(a4) storing said new music item in said database, thereby forming a database with a plurality of music items, and,
(a5) storing said new song model in a computer readable form.

10. A method performing music for a user, wherein is provided a plurality of classification parameters, comprising the steps of:
a. accessing a database containing a plurality of music items, each of said music items having a song model associated therewith, wherein
each of said song model is comprised of a plurality of classification parameters,
each of said song model is stored in computer readable form in non-volatile storage, and,
each of said classification parameters represent a musical property of said associated music item;
b. choosing at least two of said music items, thereby forming an initial playlist;
c. providing said initial playlist to the user;
d. requiring the user to select a music item from said provided initial playlist;
e. displaying to the user on a display device a graphical representation of said classification parameters associated with said selected music item;
f. interactively obtaining from the user via said displayed graphical representation a selection of one of said classification parameters;
g. interactively obtaining from the user a value describing the personal preference of said selected classification parameter, thereby obtaining a user specified personal preference value;
h. performing steps (f) and (g) at least once, thereby obtaining at least one user specified personal preference value, said at least one user specified personal preference value and said plurality of classification parameter values associated with said selected music item taken together forming a target selection model;
i. choosing one of said stored song models;
j. reading from said non-volatile storage said chosen song model;
k. comparing said chosen song model with said target selection model;
l. using said comparison of said target selection model with said chosen song model to determine a likelihood that said chosen music item should be included in a similarity playlist;
m. if said likelihood is greater than a predetermined value, including said chosen music item in said similarity playlist;
n. if said likelihood is less than said predetermined value, not including said chosen music item in said similarity playlist;
o. performing steps (i) through (n) for each of said plurality of stored song models;
p. displaying said similarity playlist to the user in a sorted order, wherein said sorted order of said similarity playlist is determined by said likelihood associated with each music item in said similarity playlist; and,
q. performing at least a two music items from said similarity playlist, thereby performing a plurality of music items for the user.

11. The method performing of music according to Claim **10**, wherein at least one of said displayed graphical representations of each of said classification parameters is associated with song metadata.

12. The method performing of music according to Claim **11**, where said metadata is selected from a group consisting of a genre, an artist, a year created, a song title, and a style.

13. The method of performing music according to Claim **10**, wherein at least one of said user graphical representations includes a "MORE LIKE THIS" parameter setting and a "LESS LIKE THIS" parameter setting.

14. The method of performing music for a user, according to Claim **10**, wherein said plurality of music items and said associated plurality of song models are both stored in said database.

15. A method performing music for a user, wherein is provided a plurality of classification parameters, comprising the steps of:
a. accessing a database containing a plurality of music items, each of said music items having a song model associated therewith, wherein each of said song model is comprised of a plurality of classification parameter, each of said song model is stored in computer readable form in non-volatile storage, each of said classification parameters representing a musical property of said associated music item;
b. choosing a plurality of said music items, thereby forming an initial playlist;
c. determining an initial ordering of said playlist music items;
d. providing said initial playlist to the user according to said initial ordering;
e. requiring the user to select a music item from said provided initial playlist;
f. displaying on a display device a graphical representation of said classification parameters associated with said selected music item;
g. interactively obtaining from the user a value representative of a personal preference with respect to at least one of said classification parameters associated with said selected music item, thereby obtaining at least one personal preference value;
h. reading from said non-volatile storage a chosen song model, thereby reading a plurality of chosen classification parameter values associated therewith, said chosen song model being associated with a chosen music item in said database;
i. using said plurality of chosen classification parameter values, said classification parameters associated with said selected music item, and said at least one personal preference value to obtain a weighted similarity value between said chosen song model and said target song model;
j. using said weighted similarity measure to determine a likelihood that said chosen music item should be provided with a different position in said initial playlist;
k. if said likelihood is greater than a predetermined value, providing said music item with a higher position in said initial playlist;
1. if said likelihood is less than said predetermined value, providing said music item with a lower position in said initial playlist;
m. performing steps (h) through (1) for at least two different chosen song models, thereby obtaining a revised playlist;
n. displaying said revised similarity playlist to the user according to said ordering determined at least in part by said at least two different weighted similarity values; and,
o. performing at least a portion of said similarity playlist for the user.

16. The method performing of music according to Claim **15**, wherein at least one of said displayed graphical representations of each of said classification parameters is associated with song metadata.

17. The method performing of music according to Claim **16**, where said metadata is selected from a group consisting of a genre, an artist, a year created, a song title, and a style.

18. The method of performing music according to Claim **15**, wherein at least one of said user graphical representations includes a "MORE LIKE THIS" parameter setting and a "LESS LIKE THIS" parameter setting.

19. The method of performing music for a user, according to Claim **15**, wherein said plurality of music items and said associated plurality of song models are both stored in said database.

20. A method performing of music for a user, wherein is provided a plurality of classification parameters, comprising the steps of:
a. accessing a database containing a plurality of music items, each of said music items having a song model associated therewith, wherein each of said song model is comprised of a plurality of classification parameters, each of said song model is stored in computer readable form in non-volatile storage, and, each of said classification parameters represent a musical property of said associated music item;
b. choosing at least two of said music items, thereby forming an initial playlist;
c. providing said initial playlist to the user;
d. requiring the user to select a music item from said at least two music items in said provided initial playlist, said selected music item having a selected song model and a plurality of selected classification parameters associated therewith;
e. displaying to the user on a display device a graphical representation of said selected classification parameters associated with said selected music item;
f. interactively obtaining from the user via said displayed graphical representation a preference weighting associated with one of said displayed classification parameter;
g. performing step (f) at least once, thereby obtaining at least one preference weighting associated with at least one of said displayed classification parameters, said at least one preference weighting and said selected song model together forming a target selection model;
h. reading one of said stored song models;
i. comparing said read song model with said target selection model;
j. using said comparison to determine a likelihood that a particular music item associated with said read song model should be included in a similarity playlist;
k. if said likelihood is greater than a predetermined value, including said particular music item in said similarity playlist;
1 if said likelihood is less than said predetermined value, not including said particular music item in said similarity playlist;
m. performing steps (h) through (l) for each of said plurality of music items in said database;
n. displaying said similarity playlist to the user in a sorted order, wherein said sorted order is determined by said likelihood associated with each music item in said similarity playlist; and,
o. performing a plurality of music items in said similarity playlist for the user, thereby performing a plurality of music items for the user.

21. The method of performing music according to Claim **20**, wherein at least one of said user graphical representations includes a "MORE LIKE THIS" parameter setting and a "LESS LIKE THIS" parameter setting.
